# EUROPEAN PATENT APPLICATION

(11) **EP 4 614 364 A1**
(43) Date of publication of application: **10.09.2025**
(21) Application number: 24161884.2
(22) Date of filing: 06.03.2024
(51) Int. Cl.: G06F 21/55, H04L 9/40

(54) **UNSUPERVISED DETECTION OF IRREGULAR COMMUNICATION BEHAVIOR OF COMMUNICATION DEVICES**

(71) Applicant: Huawei Technologies Co., Ltd., Shenzhen, Guangdong 518129 (CN)
(72) Inventor: Navarro Gonzales, Jose Manuel, 80992 Munich (DE); Huet, Alexis, 80992 Munich (DE); Krolikowski, Jonatan, 80992 Munich (DE); Chen, Fuxing, 80992 Munich (DE); Zhao, Shuijing, 80992 Munich (DE); Bao, Xiaosheng, 80992 Munich (DE); Rossi, Dario, 80992 Munich (DE)
(74) Representative: Roth, Sebastian

(57) **Abstract**

Disclosed is a device (1) for unsupervised detection of an irregular communication behaviour of a communication device under test, DUT (2, *Dᵢ, i∈[1;I]*), of a plurality of communication devices (2, *Dᵢ*)*.* The device (1) comprises a processor (11), in an inference phase being configured to determine a current communication behaviour of the DUT (2, *Dᵢ*) and to assess the current communication behaviour of the DUT (2, *Dᵢ*) in view of regular communication behaviours of the plurality of communication devices (2, *Dᵢ*), thereby enabling a swift detection of security issues like device spoofing based on an unsupervised grouping of the plurality of communication devices (2, *Dᵢ*) in accordance with their regular communication behaviours.

## Description

### TECHNICAL FIELD

The present disclosure relates generally to the field of network security, and in particular to a device and a method for unsupervised detection of an irregular communication behaviour of a communication device under test (DUT) of a plurality of communication devices.

### BACKGROUND ART

The emergence of the Internet of Things (IoT) has led to a significant increase in the number of communication devices present on a network.

In this context, device spoofing is a grave threat: malicious actors may disguise cameras or sensors as wearables, using the same MAC address they used in the past to fool network security measures.

Thus, swiftly detecting (e.g., < 1 minute) whether a communication device behaves inconsistently with its past behaviour is a crucial requirement for current networks.

Large networks have additional issues, like the number of alarms and network complexity, which make understanding the raised alarms an increasingly difficult problem for human experts.

### SUMMARY

It is an object to overcome the above-mentioned and other drawbacks.

The foregoing and other objects are achieved by the features of the independent claims. Further implementation forms are apparent from the dependent claims, the description and the figures.

According to a first aspect, a device is provided for unsupervised detection of an irregular communication behaviour of a communication device under test, DUT, of a plurality of communication devices. The device comprises a processor, in an inference phase configured to determine a current communication behaviour of the DUT; and to assess the current communication behaviour of the DUT in view of regular communication behaviours of the plurality of communication devices.

As used herein, unsupervised detection may refer to detection in absence of contextual information, such as information about device types, about the DUT and other communication devices.

As used herein, a processor may refer to a digital data processing and control logic implemented on one or more integrated circuits for executing operations of a program code. An exemplary processor may include a microprocessor, µP, a digital signal processor, DSP, a field-programmable gate array, FPGA, and/or an application-specific integrated circuit, ASIC.

This enables a swift detection of security issues like device spoofing based on an unsupervised determination of the regular communication behaviours of the plurality of communication devices. Performing threat detection on a novel network is possible without the need for device identification or domain knowledge.

As used herein, an inference phase may refer to an operation phase of a communication device wherein its current communication behaviour may be assessed in view of the regular communication behaviours of the plurality of communication devices.

As used herein, a communication behaviour of a communication device may refer to statistical parameters of time series associated with a number of communication features, such as transmitted bytes (up bytes) per second, received bytes (downbytes) per second, number of flows per second, and the like, of said communication device.

As used herein, a regular communication behaviour of a communication device may refer to a consistency of the communication behaviour of said communication device with characteristic statistical parameters of the time series associated with the number of communication features of said communication device.

As used herein, an irregular communication behaviour of a communication device may refer to an inconsistency of the communication behaviour of said communication device with its regular communication behaviour.

In a possible implementation form, for the determining of the current communication behaviour of the DUT, the processor may further be configured to provide a current time window including a current time in accordance with a window duration; and to determine statistical parameters of time series associated with the DUT within the current time window, the respective time series being indicative of a corresponding communication feature of a respective communication device of the plurality, the determined statistical parameters defining the current communication behaviour.

As used herein, a statistical parameter of a time series may particularly refer to a measure of centrality of said time series, such as a mean (or expected value) or a median, or to a measure of dispersion of said time series, such as a standard deviation or a variance.

In a possible implementation form, in a training phase preceding the inference phase, the processor may further be configured to determine the regular communication behaviours of the plurality of communication devices; and cluster the plurality of communication devices in accordance with their regular communication behaviours.

As used herein, a training phase may refer to an operation phase wherein regular communication behaviours of the plurality of communication devices may be determined.

In a possible implementation form, for the determining of the regular communication behaviours, the processor may further be configured to receive the time series respectively being indicative of the corresponding communication feature of the respective communication device of the plurality; provide time windows in accordance with a window duration and a window displacement; and determine statistical parameters of the respective time series within the respective time window, the determined statistical parameters defining a respective regular communication behaviour.

As used herein, a window duration may refer to a time period between a beginning and an end of a time window during which the statistical parameters of the time series associated with a communication feature of a communication device may be determined.

As used herein, a window displacement may refer to a time period between the ends (or the beginnings) of subsequent time windows. The ends of subsequent time windows may represent a more intuitive reference, since the end of a time window is the moment when detection may occur. During inference, the end of the time window is "now", and the time window stands for the recent past up to "now". In normal conditions, the period between beginnings of time windows and the period between the ends of time windows may be the same, however.

Using a same behavioural clustering model for all communication devices, trained during the training phase and applied during the inference phase imparts a deeper understanding of irregular communication behaviour by relating with regular communication behaviours among communication devices. In other words, the behavioural clustering establishes a way to measure the deviation from normal communication behaviour, which is then applied during inference.

In a possible implementation form, for the clustering of the plurality of communication devices in accordance with their regular communication behaviours, the processor may further be configured to form behavioural clusters in accordance with the regular communication behaviours of the plurality of communication devices; determine behavioural cluster affiliations of the respective communication device with the behavioural clusters, and behavioural cluster affiliation shares of the respective communication device in the behavioural clusters, in accordance with the regular communication behaviours of the respective communication device; form device clusters in accordance with the behavioural cluster affiliation shares of the plurality of communication devices; and determine a device cluster affiliation of the respective communication device with the device clusters.

As used herein, clustering or cluster analysis may refer to a family of algorithms for grouping of objects in such a way that objects in a same group (i.e., cluster) are more similar (according to some measure of similarity) to one another than to those in other groups (clusters). Exemplary clustering algorithms include K-means clustering and Hierarchical Density-Based Spatial Clustering of Applications with Noise, HDBSCAN.

As used herein, behavioural clusters (*"traffic clustering model"*) may refer to one or more groups of regular communication behaviours of a plurality of communication devices being associated with similar characteristic statistical parameters of the time series associated with their number of communication features.

As used herein, behavioural cluster affiliations (*"traffic clustering summary"*) may refer to one or more memberships of a communication device in the behavioural clusters.

As used herein, behavioural cluster affiliation shares (*"data for device clustering"*) may refer to a normalized percentage breakdown of the regular communication behaviours of a communication device per behavioural cluster.

As used herein, device clusters (*"device clustering model"*) may refer to one or more groups of communication devices being associated with similar behavioural cluster affiliation shares.

As used herein, a device cluster affiliation (*"device clustering summary"*) may refer to a - single - membership of a communication device in the device clusters.

The device clustering allows network owners to explore in detail the types of communication behaviours / patterns in their network.

In a possible implementation form, the behavioural cluster affiliations of the respective communication device may further comprise an affiliation associated with a silent behaviour.

As used herein, a silent behaviour may refer to no communication activity.

Taking into account the silent behaviour allows for assessing of communication devices that behave differently in the training and inference phases.

In a possible implementation form, the processor may further be configured to store, in the training phase, one or more of the following for use in the inference phase: the behavioural clusters, the behavioural cluster affiliations, and the device cluster affiliation.

In a possible implementation form, the processor may further be configured to retrieve, in the inference phase, one or more of the following from storage: the behavioural clusters, the behavioural cluster affiliations, and the device cluster affiliation.

Storing and retrieving clustering data allows for saving computing time and effort during inference, because only a single training phase is needed for potentially countless inference phases. In other words, the respective inference phase does not require a dedicated training phase.

In a possible implementation form, for the assessing of the current communication behaviour of the DUT in view of the regular communication behaviours of the plurality of communication devices, the processor may further be configured to trigger an alarm if the current communication behaviour of the DUT cannot be associated with any one of the behavioural cluster affiliations of the DUT.

As used herein, an alarm may refer to a notification for alerting a user and/or an operator of a network to a problem or condition that requires more or less urgent human attention depending on a level of severity of said alarm.

In a possible implementation form, for the triggering of the alarm, the processor may further be configured to trigger a first-level alarm if the current communication behaviour of the DUT can be associated with any one of the behavioural cluster affiliations of any one of the communication devices of the device cluster affiliation of the DUT.

In a possible implementation form, for the triggering of the alarm, the processor may further be configured to trigger a second-level alarm if the current communication behaviour of the DUT cannot be associated with any one of the behavioural cluster affiliations of any one of the communication devices of the device cluster affiliation of the DUT.

The clustering data allows for a distinction of different severity alarm levels based on past devices traffic similarity. The two-levelled approach to alarms allows network experts to filter lower severity alarms if needed.

In a possible implementation form, the processor may further be configured to generate an alarm report responsive to the triggering, the alarm report comprising one or more of: a graphical representation of the time series associated with the triggered alarm, a graphical representation of the statistical parameters of the time series associated with the triggered alarm, a projection of the respective time window associated with the triggered alarm in the graphical representation of the time series associated with the triggered alarm, a projection of the respective time window associated with the triggered alarm in the graphical representation of the statistical parameters of the time series associated with the triggered alarm, and a graphical representation of the DUT in a device tree in accordance with its device cluster affiliation and its behavioural cluster affiliations.

The clustering data allows for a rich output representation extracted from both clusterings.

According to a second aspect, a method is provided for unsupervised detection of an irregular communication behaviour of a communication device under test, DUT, of a plurality of communication devices. In an inference phase, the method comprises determining a current communication behaviour of the DUT; and assessing the current communication behaviour of the DUT in view of regular communication behaviours of the plurality of communication devices.

In a possible implementation form, the method may be performed by the device of the first aspect or any of its implementations.

According to a third aspect, a computer program is provided, comprising a program code for performing the method of the second aspect or any of its implementations when executed on a computer.

### BRIEF DESCRIPTION OF DRAWINGS

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a device in accordance with the present disclosure;
- FIG. 2: illustrates the determining of the regular communication behaviours of the plurality of communication devices in accordance with the present disclosure;
- FIG. 3: illustrates determining of statistical parameters defining the regular communication behaviours of the plurality of communication devices in accordance with the present disclosure;
- FIG. 4: schematically illustrates derivation of behavioural clusters in accordance with the regular communication behaviours of the plurality of communication devices in accordance with the present disclosure;
- FIG. 5: illustrates derivation of behavioural clusters in accordance with the regular communication behaviours, behavioural cluster affiliations with the behavioural clusters, and behavioural cluster affiliation shares in the behavioural clusters, in accordance with the present disclosure;
- FIG. 6: illustrates derivation of device clusters in accordance with the behavioural cluster affiliation shares, and a device cluster affiliation of the respective communication device with the device clusters, in accordance with the present disclosure;
- FIGs. 7 to 8: illustrate an exemplary training phase of a real-world test case in accordance with the present disclosure;
- FIGs. 9 to 10: illustrate an exemplary first inference phase of the real-world test case in accordance with the present disclosure;
- FIGs. 11 to 12: illustrate an exemplary second inference phase of the real-world test case in accordance with the present disclosure; and
- FIG. 13: illustrates a method in accordance with the present disclosure.

### DETAILED DESCRIPTIONS OF DRAWINGS

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

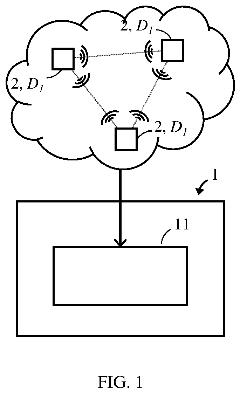

FIG. 1 illustrates a device 1 in accordance with the present disclosure.

The device 1 comprises a processor 11 and is suitable for unsupervised detection of an irregular communication behaviour of a communication device under test, DUT 2, *Dᵢ, i∈[1;I]* of a plurality of communication devices 2, *Dᵢ.* In other words, the device 1 has a monitoring capability. Note that any communication devices 2, *Dᵢ* of the plurality may be the DUT 2, *Dᵢ,* and that having one DUT 2, *Dᵢ* does not preclude having more than one DUT 2, *Dᵢ* at the same time.

In particular, the plurality of communication devices 2, *Dᵢ* may comprise IoT devices.

As used herein, the Internet of Things or IoT may refer to communication devices including sensors, processing ability, software and other technologies that connect and exchange data with other devices and systems over the Internet or other communications networks.

In the non-limiting example of FIG. 1, the plurality of communication devices 2, *Dᵢ* comprises three elements, each of which may constitute the DUT 2, *Dᵢ* at some point in time.

A workflow of the device 1 may involve a number of operation phases. More specifically, the device 1 may be operated in a training phase and/or in an inference phase succeeding the training phase.

In the training phase, the processor 11 may be configured to determine regular communication behaviours of the plurality of communication devices 2, *Dᵢ*; and cluster the plurality of communication devices 2, *Dᵢ* in accordance with their regular communication behaviours.

That is to say, enough traffic may be collected to represent all normal behavioural patterns from every device type to monitor, but not necessarily from every device. For example, if three printers of a same brand and model are present in a network, it would only be necessary for one of them to print during the training period. In any case, an arbitrarily large period of normal operation (like 1 day) may be enough.

In the inference phase, the processor 11 may be configured to determine a current communication behaviour of the DUT 2, *Dᵢ*; and to assess the current communication behaviour of the DUT 2, *Dᵢ* in view of regular communication behaviours of the plurality of communication devices 2, *Dᵢ.*

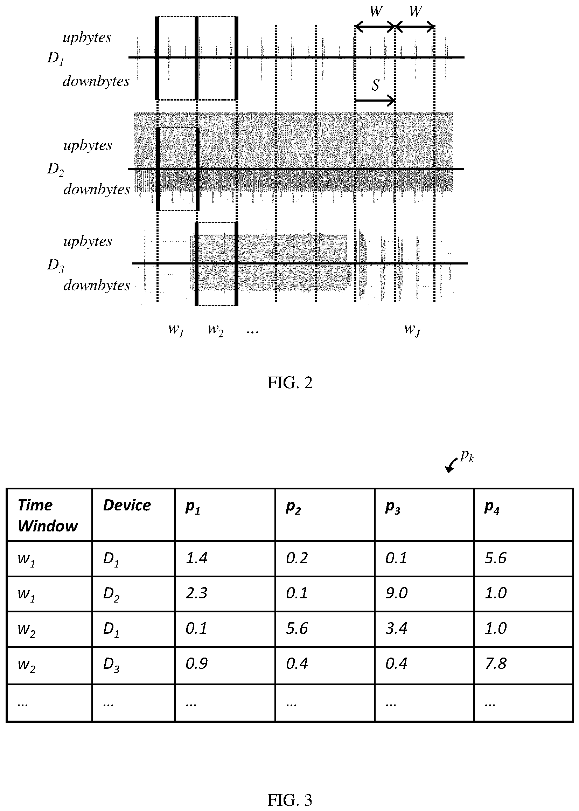

FIG. 2 illustrates the determining of the regular communication behaviours of the plurality of communication devices 2, *Dᵢ* in accordance with the present disclosure.

For the determining of the regular communication behaviours, which may take place in the training phase, the processor 11 may be configured to receive time series respectively being indicative of a corresponding communication feature of the respective communication device 2, *Dᵢ* of the plurality.

Thus, from the collected traffic, per device, selected time series may be extracted.

In the non-limiting example of FIG. 2, said communication features include transmitted bytes (upbytes) per second and received bytes (downbytes) per second for each one of the communication devices *Di, D₂* and *D₃*, respectively.

The processor 11 may further be configured to provide time windows *wⱼ*, *j∈[1;J]* in accordance with a window duration W and a window displacement *S*.

Each time series is windowed, with duration *W* and displacement *S*.

In the non-limiting example of FIG. 2, a grid of vertical lines with equal distances corresponding to the window duration W and the window displacement *S* indicates potential beginnings and ends of time windows.

Note that in the example of FIG. 2, the time windows *wⱼ* indicated by bold lines / boxes represent illustrative examples, which merely occupy a fraction of the time dimension. Actually, it may not be needed to contiguously cover the time axis by the provided time windows *wⱼ*. However, in the example of FIG. 2, we suppose full coverage of the time axis by the provided time windows *wⱼ.*

The processor 11 may further be configured to determine statistical parameters *pₖ, k∈[1;K]* of the respective time series being indicative of the corresponding communication feature within the respective time window *wⱼ*. The determined statistical parameters *pₖ* define the respective regular communication behaviour of the respective communication device 2, *Dᵢ* of the plurality.

Thus, the windowed time series are projected to *K*-dimensional vectors *[pₖ],* i.e., one vector per time window. The collected traffic is turned into tabular data, wherein each communication device 2, *Dᵢ* of the plurality is characterized by a number of rows containing statistical parameters (or meta-features) *pₖ* extracted from its time windows *wⱼ*.

FIG. 3 illustrates determining of statistical parameters *pₖ* defining the regular communication behaviours of the plurality of communication devices 2, *Dᵢ* in accordance with the present disclosure.

The first column of the table refers to the respective time window *wⱼ* of FIG. 2 which has been subj ected to statistical evaluation.

The second column mentions the respective communication device 2, *Dᵢ.*

The third to sixth columns identifies the determined statistical parameters or meta-features *pₖ.* For example, *p₁* - *p₄* may represent mean values (or medians) and variances (or standard deviations) of the upbytes and the downbytes of the respective communication device 2, *Dᵢ.*

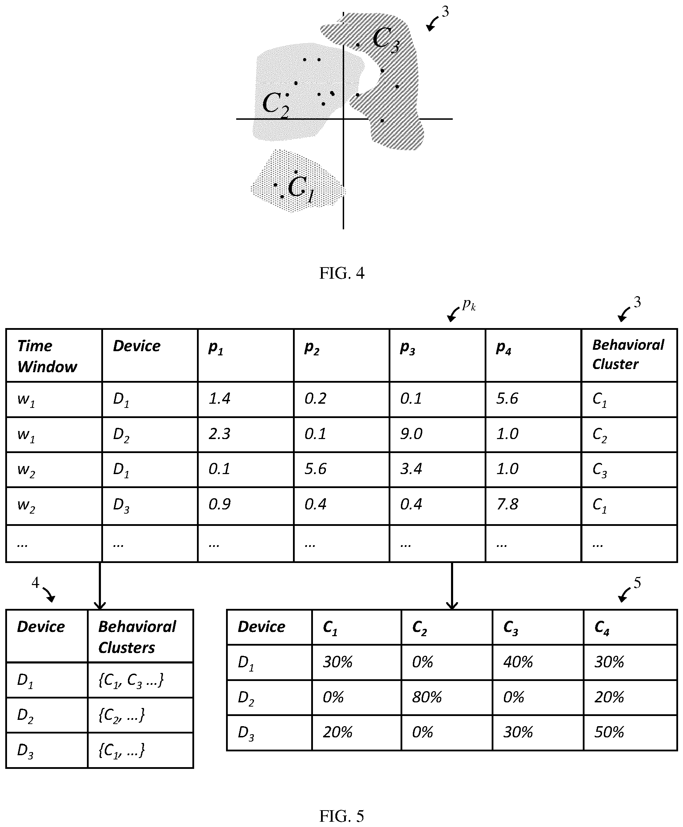

FIG. 4 schematically illustrates derivation of behavioural clusters 3, *Cₗ* in accordance with the regular communication behaviours of the plurality of communication devices 2, *Dᵢ* in accordance with the present disclosure.

The dots indicated in FIG. 4 represent the vectors *[pₖ]* formed by the determined statistical parameters *pₖ* as its scalar components, and the shaded areas enclosing groups of said dots denote clusters resulting from the cluster analysis.

Note that FIG. 4 shows a descriptive two-dimensional example of clustering, whereas a cluster analysis taking into account the determined statistical parameters *pₖ, k∈[1;K]* generally takes place in a *K*-dimensional vector space.

FIG. 5 illustrates derivation of behavioural clusters 3, *Cₗ* in accordance with the regular communication behaviours, behavioural cluster affiliations 4 with the behavioural clusters 3, *Cₗ,* and behavioural cluster affiliation shares 5 in the behavioural clusters *3, Cₗ,* in accordance with the present disclosure.

For the clustering of the plurality of communication devices 2, *Dᵢ* in accordance with their regular communication behaviours, the processor 11 may be configured to form behavioural clusters 3, *Cₗ, l∈[1;L]* in accordance with the regular communication behaviours of the plurality of communication devices 2, *Dᵢ.*

Using as input the afore-mentioned tabular data, i.e., the determined statistical parameters *pₖ* (shown in FIG. 3, for example) defining the regular communication behaviour of the respective communication device 2, *Dᵢ* of the plurality, the projected time windows *wⱼ* are grouped using a clustering algorithm such as K-means clustering, for example. This yields the behavioural clusters 3, *Cₗ* (a.k.a. traffic clustering model) indicated in the rightmost column of the upper table of FIG. 5 and to be used during the inference phase.

The processor 11 may further be configured to determine behavioural cluster affiliations 4 of the respective communication device 2, *Dᵢ* with the behavioural clusters 3, *Cₗ* (a.k.a. traffic clustering summary). This table is shown on the lower-left of FIG. 5 and relates each communication device 2, *Dᵢ* of the plurality to the behavioural clusters 3, *Cₗ* its projected time windows *wⱼ* belong to, also to be used during the inference phase.

The processor 11 may further be configured to determine behavioural cluster affiliation shares 5 of the respective communication device 2, *Dᵢ* in the behavioural clusters 3, *Cₗ,* in accordance with the regular communication behaviours of the respective communication device 2, *Dᵢ.* This table is shown on the lower-right of FIG. 5 and characterizes a proportion of the projected time windows *wⱼ* of each communication device 2, *Dᵢ* of the plurality that belong to each of the behavioural clusters 3, *Cₗ* and is of temporary use as data for device clustering.

The behavioural cluster affiliations 4 of the respective communication device 2, *Dᵢ* may further comprise an affiliation associated with a silent behaviour, allowing for assessment of the communication devices 2, *Dᵢ* of the plurality that behave differently in the training and inference phases.

The processor 11 may further be configured to store one or more of the behavioural clusters 3, *Cₗ* and the behavioural cluster affiliations 4 in the training phase for use in the inference phase.

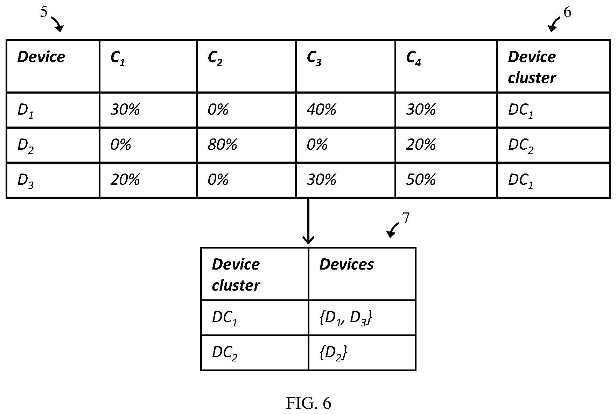

FIG. 6 illustrates derivation of device clusters 6, *DCₘ* in accordance with the behavioural cluster affiliation shares 5, and a device cluster affiliation 7 of the respective communication device 2, *Dᵢ* with the device clusters 6, *DCₘ,* in accordance with the present disclosure.

For the clustering of the plurality of communication devices 2, *Dᵢ* in accordance with their regular communication behaviours, the processor 11 may further be configured to form device clusters 6, *DCₘ, m∈[1;M]* in accordance with the behavioural cluster affiliation shares 5 of the plurality of communication devices 2, *Dᵢ.*

Using as input the behavioural cluster affiliation shares 5, the communication devices 2, *Dᵢ* are grouped using a clustering algorithm. This yields the device clusters 6, *DCₘ* (a.k.a. device clustering model) indicated in the rightmost column of the upper table of FIG. 6.

The processor 11 may further be configured to determine a device cluster affiliation 7 of the respective communication device 2, *Dᵢ* with the device clusters 6, *DCₘ.*

The processor 11 may further be configured to store the device cluster affiliation 7 (a.k.a. device clustering summary) of the respective communication device 2, *Dᵢ* of the plurality in the training phase for use in the inference phase. This table is shown in the lower table of FIG. 6 and groups the communication devices 2, *Dᵢ* of the plurality in sets of similar behaviour, also for use during the inference phase.

This concludes the training phase.

In the inference phase, the processor 11 may benefit from a previous training phase by execution of the same or by retrieval of its relevant results from storage.

More specifically, the processor 11 may be configured to retrieve one or more of the behavioural clusters 3, *Cₗ,* the behavioural cluster affiliations 4 and the device cluster affiliations 7 of the respective communication device 2, *Dᵢ* of the plurality from storage in the inference phase.

During inference, as new traffic is received / collected, the current communication behaviour of the DUT 2, *Dᵢ* of the plurality may be determined just as its regular communication behaviour in the training phase.

More specifically, for the determining of the current communication behaviour of the DUT 2, *Dᵢ,* the processor 11 may be configured to provide a current time window including a current time in accordance with the window duration W.

Likewise, the processor 11 may further be configured to determine statistical parameters of time series associated with the DUT 2, *Dᵢ* within the current time window.

The respective time series may be indicative of a corresponding communication feature of a respective communication device 2, *Dᵢ* of the plurality, in particular of the DUT 2, *Dᵢ.*

The determined statistical parameters may define the current communication behaviour.

For the assessing of the current communication behaviour of the DUT 2, *Dᵢ* in view of the regular communication behaviours of the plurality of communication devices 2, *Dᵢ,* the processor 11 may be configured to trigger an alarm if the current communication behaviour of the DUT 2, *Dᵢ* cannot be associated with any one of the behavioural cluster affiliations 4 (i.e., previously seen behaviours) of the DUT 2, *Dᵢ.*

First-level alarms are those in which the DUT 2, *Dᵢ* exhibits a behaviour that cannot be associated with any one of the behavioural cluster affiliations 4, but its behaviour is seen for other communication devices 2, *Dᵢ* in the same device cluster 6, *DCₘ.*

The processor 11 may be configured to trigger a first-level alarm if the current communication behaviour of the DUT 2, *Dᵢ* can be associated with any one of the behavioural cluster affiliations 4 of any one of the communication devices 2 of the device cluster affiliation 7 of the DUT 2, *Dᵢ.*

So if the current communication behaviour of the DUT 2, *Dᵢ* as defined by the determined statistical parameters *pₖ* maps to a behavioural cluster 3, *Cₗ* unseen for the DUT 2, *Dᵢ* in its behavioural cluster affiliations 4 but seen in behavioural cluster affiliations 4 for other communication devices 2, *Dᵢ* associated with the device cluster affiliation 7 of the DUT 2, *Dᵢ,* a first-level alarm is generated.

Second-level alarms are those in which the DUT 2, *Dᵢ* exhibits a behaviour that has not been seen in the same device cluster 6, *DCₘ* either.

The processor 11 may be configured to trigger a second-level alarm if the current communication behaviour of the DUT 2, *Dᵢ* cannot be associated with any one of the behavioural cluster affiliations 4 of any one of the communication devices 2 of the device cluster affiliation 7 of the DUT 2, *Dᵢ.*

So if the current communication behaviour of the DUT 2, *Dᵢ* maps to a behavioural cluster 3, *Cₗ* not present in the behavioural cluster affiliations 4 of any communication device 2, *Dᵢ* associated with the device cluster affiliations 7 of the DUT 2, *Dᵢ,* a second-level alarm is generated.

Thus, the present disclosure provides two alarm levels, differentiated by their severity / deviation from previously seen behaviour of the respective communication device 2, *Dᵢ* of the plurality.

The processor 11 may further be configured to generate an alarm report responsive to the triggering of the alarm.

The alarm report may provide details on the irregular behaviour detected in terms of both clusterings and assist with the anomaly's interpretation.

The alarm report may comprise one or more of:
- a graphical representation of the time series associated with the triggered alarm,
- a graphical representation of the statistical parameters *pₖ* of the time series associated with the triggered alarm,
- a projection of the respective time window *wⱼ* associated with the triggered alarm in the graphical representation of the time series associated with the triggered alarm,
- a projection of the respective time window *wⱼ* associated with the triggered alarm in the graphical representation of the statistical parameters *pₖ* of the time series associated with the triggered alarm, and
- a graphical representation of the DUT 2, *Dᵢ* in a device tree 8 in accordance with its device cluster affiliation 7 and its behavioural cluster affiliations 4.

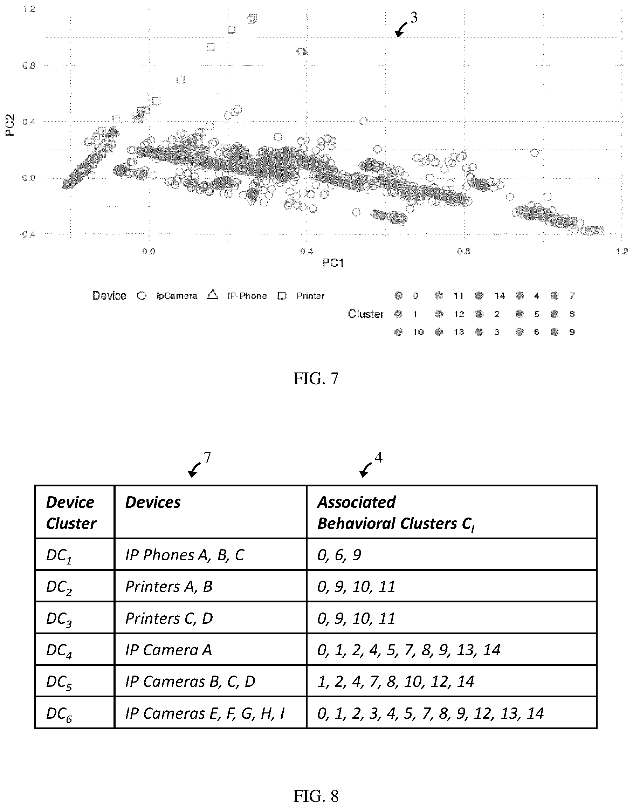

FIGs. 7 to 8 illustrate an exemplary training phase of a real-world test case in accordance with the present disclosure.

The following parameters were used for the training phase:
- Features used: {upbytes / s, downbytes / s, number of flows}, sampled each second.
- Windowing: window displacement S = *10s,* window duration *W* = *30s.*
- statistical parameters / meta-features: {average, standard deviation}, with an additional MinMax normalization step.
- Grouping:
   - Behavioural Clustering: K-Means with 15 clusters.
   - Device Clustering: HDBSCAN with cosine distance and minimum points = 2.

The resulting behavioural clustering 3, *Cₗ* depicted in FIG. 7 has been projected using Principal Components in two dimensions for visualization purposes and visibly separates the behavioural clusters 3, *Cₗ* of the plurality of communication devices 2, *Dᵢ.*

The resulting device cluster affiliations 7 and the underlying behavioural cluster affiliations 4 of the plurality of communication devices 2, *Dᵢ* are presented in FIG. 8.

As can be seen, different device types are correctly sorted in different device clusters 6, *DCₘ.* Note that information about device types is only used for display purposes but is not accessible to the device 1 at any point.

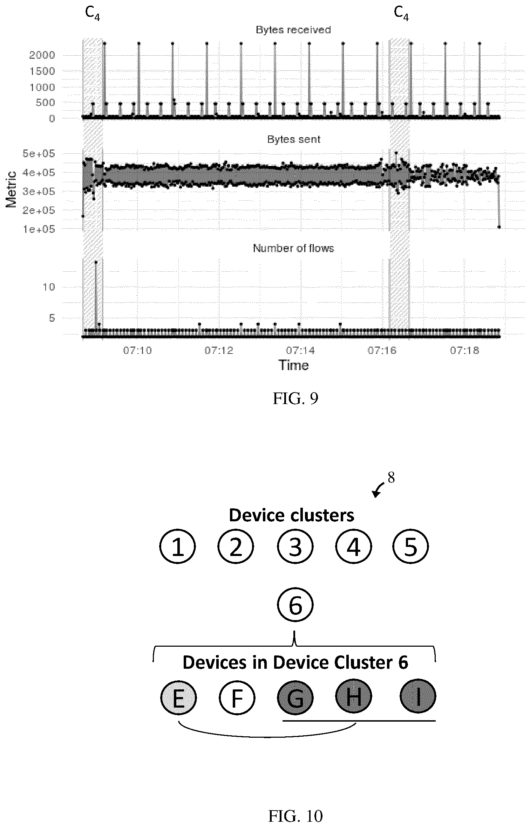

FIGs. 9 to 10 illustrate an exemplary first inference phase of the real-world test case in accordance with the present disclosure.

The first example belongs to IP Camera E, whose associated behavioural clusters 3, *Cₗ* are {1, 2, 8}, belonging to device cluster 6, *DC₆*.

The time series associated with IP Camera E are illustrated in FIG. 9.

Two regions in time are marked as irregular communication behaviour, as they are assigned to behavioural cluster 3, *C₄.* To determine a level of severity of the alarm, the associated behavioural clusters 3, *Cₗ* of the device clusters 6, *DCₘ* that IP Camera E belongs to are checked (see FIG. 8). Since behavioural cluster 3, *C₄* is present in device cluster 6, *DC₆,* which means this behaviour has been seen in communication devices 2, *Dᵢ* with patterns similar to IP Camera E, it is considered a first-level alarm.

FIG. 10 shows a graphical representation of the DUT 2, *Dᵢ* (i.e., IP Camera E) in a device tree 8 in accordance with its device cluster 6, *DC₆.* The device tree 8 may form part of the alarm report and indicates that IP Camera E shows a known behaviour of other IP cameras G, H, I in the same device cluster 6, *DC₆.*

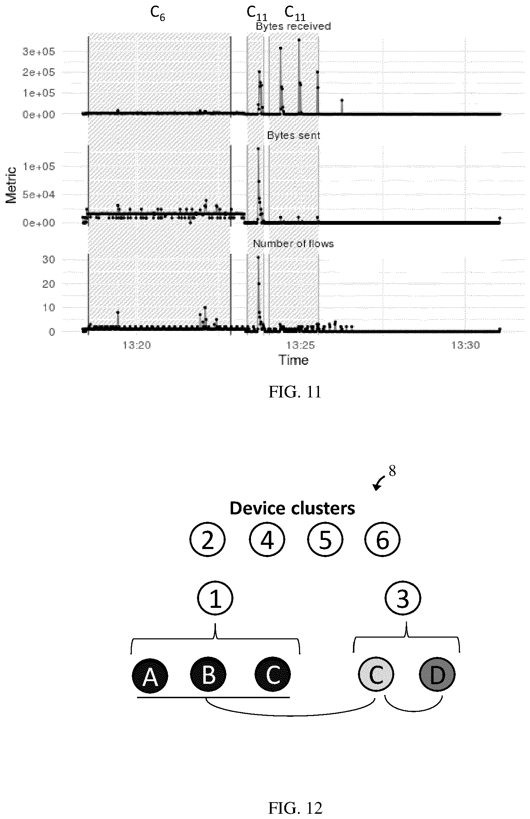

FIGs. 11 to 12 illustrate an exemplary second inference phase of the real-world test case in accordance with the present disclosure.

In the second example Printer C is tracked, whose associated behavioural clusters 3, *Cₗ* are {0, 9, 10} belonging to device cluster 6, *DC₃.*

The time series of Printer C are shown in FIG. 11.

Three regions in time are marked as irregular communication behaviour, the first one assigned to behavioural clusters 3, *C₆* and the last two to behavioural cluster 3, *C₁₁.*

To determine a level of severity of the first alarm, the associated behavioural clusters 3, *Cₗ* of the device cluster 6, *DC₃* that Printer C belongs to are checked (see FIG. 8). Since behavioural cluster 3, *C₆* is not associated with device cluster 6, *DC₃,* which means this behaviour has not been seen in communication devices 2, *Dᵢ* with patterns similar to Printer C, it is considered a second-level alarm.

To determine level of severity of the second and third alarms, the associated behavioural clusters 3, *Cₗ* of the device cluster 6, *DC₃* that Printer C belongs to are checked. Since behavioural cluster 3, *C₁₁* is present in device cluster 6, *DC₃,* which means this behaviour has been seen in communication devices 2, *Dᵢ* with patterns similar to Printer C, they are considered first-level alarms.

FIG. 10 shows a graphical representation of the DUT 2, *Dᵢ* (i.e., Printer C) in a device tree 8 in accordance with its device cluster 6, *DC₃.* The device tree 8 may form part of the alarm report and indicates that Printer C shows a known behaviour of IP Phones A, B, C in a different device cluster 6, *DC₁* (first alarm) and a known behaviour of Printer D in the same device cluster *6, DC₃* (second and third alarms).

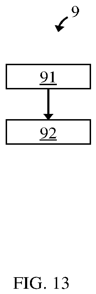

FIG. 13 illustrates a method 9 in accordance with the present disclosure.

The method 9 is suitable for unsupervised detection of an irregular communication behaviour of a communication device under test, DUT 2, *Dᵢ,* of a plurality of communication devices 2, *Dᵢ.*

In an inference phase, the method 9 comprises a step of determining 91 a current communication behaviour of the DUT 2, *Dᵢ,* and a step of assessing 92 the current communication behaviour of the DUT 2, *Dᵢ* in view of regular communication behaviours of the plurality of communication devices 2, *Dᵢ.*

The method 9 may be performed by the device 1 of the first aspect or any of its implementations.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfil the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A device (1) for unsupervised detection of an irregular communication behavior of a communication device under test, DUT (2, *Dᵢ),* of a plurality of communication devices (2, *Dᵢ),* the device (1) comprising
a processor (11), in an inference phase configured to
- determine a current communication behavior of the DUT (2, *Dᵢ*); and
- assess the current communication behavior of the DUT (2, *Dᵢ*) in view of regular communication behaviors of the plurality of communication devices (2, *Dᵢ*).

2. The device (1) of claim 1,
wherein for the determining of the current communication behavior of the DUT (2, *Dᵢ),* the processor (11) is further configured to
- provide a current time window including a current time in accordance with a window duration (W); and
- determine statistical parameters of time series associated with the DUT (2, *Dᵢ*) within the current time window, the respective time series being indicative of a corresponding communication feature of a respective communication device (2, *Dᵢ)* of the plurality, the determined statistical parameters defining the current communication behavior.

3. The device (1) of claim 1 or claim 2,
the processor (11) in a training phase preceding the inference phase further configured to
- determine the regular communication behaviors of the plurality of communication devices (2, *Dᵢ*); and
- cluster the plurality of communication devices (2, *Dᵢ*) in accordance with their regular communication behaviors.

4. The device (1) of claim 3,
wherein for the determining of the regular communication behaviors, the processor (11) is further configured to
- receive the time series respectively being indicative of the corresponding communication feature of the respective communication device (2, *Dᵢ*) of the plurality;
- provide time windows (*wⱼ*) in accordance with a window duration (*W*) and a window displacement (*S*); and
- determine statistical parameters *(pₖ)* of the respective time series within the respective time window (*wⱼ*), the determined statistical parameters *(pₖ)* defining a respective regular communication behavior.

5. The device (1) of claim 3 or claim 4,
wherein for the clustering of the plurality of communication devices (2, *Dᵢ*) in accordance with their regular communication behaviors, the processor (11) is further configured to
- form behavioral clusters (3, *Cₗ*) in accordance with the regular communication behaviors of the plurality of communication devices (2, *Dᵢ*);
- determine behavioral cluster affiliations (4) of the respective communication device (2, *Dᵢ*) with the behavioral clusters *(3, Cₗ*), and behavioral cluster affiliation shares (5) of the respective communication device (2, *Dᵢ*) in the behavioral clusters (3, *Cₗ*), in accordance with the regular communication behaviors of the respective communication device;
- form device clusters (6, *DCₘ*) in accordance with the behavioral cluster affiliation shares (5) of the plurality of communication devices (2, *Dᵢ*); and
- determine a device cluster affiliation (7) of the respective communication device (2, *Dᵢ*) with the device clusters (6, *DCₘ*).

6. The device (1) of claim 5,
the behavioral cluster affiliations (4) of the respective communication device (2, *Dᵢ*) further comprising an affiliation associated with a silent behavior.

7. The device (1) of claim 5 or claim 6,
the processor (11) further configured to
- store, in the training phase, one or more of the following for use in the inference phase:
- the behavioral clusters (3, *Cₗ*),
- the behavioral cluster affiliations (4), and
- the device cluster affiliation (7).

8. The device (1) of any one of the claims 5 to 7,
the processor (11) further configured to
- retrieve, in the inference phase, one or more of the following from storage:
- the behavioral clusters (3, *Cₗ*),
- the behavioral cluster affiliations (4), and
- the device cluster affiliation (7).

9. The device (1) of any one of the claims 5 to 8,
wherein for the assessing of the current communication behavior of the DUT (2, *Dᵢ*) in view of the regular communication behaviors of the plurality of communication devices (2, *Dᵢ),* the processor (11) is further configured to
- trigger an alarm if the current communication behavior of the DUT (2, D;) cannot be associated with any one of the behavioral cluster affiliations (4) of the DUT (2, *Dᵢ*).

10. The device (1) of claim 9,
wherein for the triggering of the alarm, the processor (11) is further configured to
- trigger a first-level alarm if the current communication behavior of the DUT (2, *Dᵢ*) can be associated with any one of the behavioral cluster affiliations (4) of any one of the communication devices (2) of the device cluster affiliation (7) of the DUT (2, *Dᵢ*).

11. The device (1) of claim 9 or claim 10,
wherein for the triggering of the alarm, the processor (11) is further configured to
- trigger a second-level alarm if the current communication behavior of the DUT (2, *Dᵢ*) cannot be associated with any one of the behavioral cluster affiliations (4) of any one of the communication devices (2) of the device cluster affiliation (7) of the DUT (2, *Dᵢ*).

12. The device (1) of any one of the claims 9 to 11,
wherein the processor (11) is further configured to
- generate an alarm report responsive to the triggering, the alarm report comprising one or more of:
- a graphical representation of the time series associated with the triggered alarm,
- a graphical representation of the statistical parameters *(pₖ)* of the time series associated with the triggered alarm,
- a projection of the respective time window (*wⱼ*) associated with the triggered alarm in the graphical representation of the time series associated with the triggered alarm,
- a projection of the respective time window (*wⱼ*) associated with the triggered alarm in the graphical representation of the statistical parameters *(pₖ)* of the time series associated with the triggered alarm, and
- a graphical representation of the DUT (2, *Dᵢ*) in a device tree (8) in accordance with its device cluster affiliation (7) and its behavioral cluster affiliations (4).

13. A method (9) for unsupervised detection of an irregular communication behavior of a communication device under test, DUT (2, *Dᵢ),* of a plurality of communication devices (2, *Dᵢ),* the method (9) comprising
- in an inference phase,
- determining (91) a current communication behavior of the DUT (2, *Dᵢ),* and
- assessing (92) the current communication behavior of the DUT (2, *Dᵢ*) in view of regular communication behaviors of the plurality of communication devices (2, *Dᵢ*).

14. The method (9) of claim 13,
being performed by the device (1) of any one of the claims 1 to 12.

15. A computer program, comprising
a program code for performing the method (9) of claim 13 or claim 14 when executed on a computer.

## Amended claims

### Amended claims in accordance with Rule 137(2) EPC.

1. A device (1) for unsupervised detection of an irregular communication behavior of a communication device under test, DUT (2, *Di),* of a plurality of communication devices (2, *Dᵢ*)*,* the device (1) comprising
a processor (11), in an inference phase configured to
- determine a current communication behavior of the DUT (2, *Dᵢ*);
- assess the current communication behavior of the DUT (2, *Dᵢ*) in view of regular communication behaviors of the plurality of communication devices (2, *Dᵢ*)*,*
wherein the plurality of communication devices (2, *Dᵢ*) are associated with behavioral clusters (3, *Cₗ*) in accordance with their regular communication behaviors and are associated with device clusters (6, *DCₘ*) in accordance with their respective behavioral cluster affiliation shares (5) in the behavioral clusters (3, *Cₗ*) in accordance with their regular communication behaviors;
wherein for assessing the current communication behavior of the DUT (2, *Di),* the processor is configured to determine whether the current communication behavior of the DUT (2, *Dᵢ*) can be associated with any behavioral cluster affiliation (4) of the DUT (2, *Dᵢ*) with the behavioral clusters (3, *Cₗ*); and
- trigger an alarm if the current communication behavior of the DUT (2, *Dᵢ*) cannot be associated with any behavioral cluster affiliation (4) of the DUT (2, *Dᵢ*);
wherein a first-level alarm is triggered if the current communication behavior of the DUT (2, *Dᵢ*) can be associated with any behavioral cluster affiliation (4) of any communication device (2) associated with the same device cluster (6) as the DUT (2, *Dᵢ*); and
wherein a second-level alarm is triggered if the current communication behavior of the DUT (2, *Dᵢ*) cannot be associated with any behavioral cluster affiliation (4) of any communication device (2) associated with the same device cluster (6) as the DUT (2, *Dᵢ*)*.*

2. The device (1) of claim 1,
wherein for the determining of the current communication behavior of the DUT (2, *Dᵢ*)*,* the processor (11) in the inference phase is further configured to
- provide a current time window including a current time in accordance with a window duration (W); and
- determine statistical parameters of time series associated with the DUT (2, *Dᵢ*) within the current time window, the respective time series being indicative of a corresponding communication feature of a respective communication device (2, *Dᵢ*) of the plurality, the determined statistical parameters defining the current communication behavior.

3. The device (1) of claim 1 or claim 2,
wherein the processor (11) in the inference phase is further configured to
- retrieve one or more of the following from storage:
- the behavioral clusters (3, *Cₗ*) associated with the communication device s(2, *Dᵢ*)*,*
- the behavioral cluster affiliations (4) of the communication device (2, *Dᵢ*) with the behavioral clusters (3, *Cₗ*), and
- device cluster affiliations (7) of the communication devices (2, *Dᵢ*) with the device clusters (6, *DCₘ*).

4. The device (1) of any one of the claims 1 to 3,
wherein the processor (11) in the inference phase is further configured to generate an alarm report responsive to the triggering of the alarm, the alarm report comprising a graphical representation of the DUT (2, *Dᵢ*) in a device tree (8) in accordance with its device cluster affiliation (7) and its behavioral cluster affiliations (4).

5. The device (1) of any one of claims 1 to 4,
the processor (11) in a training phase preceding the inference phase further configured to
- determine the regular communication behaviors of the plurality of communication devices (2, *Dᵢ*); and
- cluster the plurality of communication devices (2, *Dᵢ*) in accordance with their regular communication behaviors.

6. The device (1) of claim 5,
wherein for the determining of the regular communication behaviors, the processor (11) in the training phase is further configured to
- receive the time series respectively being indicative of the corresponding communication feature of the respective communication device (2, *Dᵢ*) of the plurality;
- provide time windows (*wⱼ*) in accordance with a window duration (*W*) and a window displacement (S); and
- determine statistical parameters (*pₖ*) of the respective time series within the respective time window (*wⱼ*), the determined statistical parameters (*pₖ*) defining a respective regular communication behavior.

7. The device (1) of claim 6 or claim 7,
wherein for the clustering of the plurality of communication devices (2, *Dᵢ*) in accordance with their regular communication behaviors, the processor (11) in the training phase is further configured to
- form the behavioral clusters (3, *Cₗ*) in accordance with the regular communication behaviors of the plurality of communication devices (2, *Dᵢ*);
- determine the behavioral cluster affiliations (4) of the respective communication device (2, *Dᵢ*) with the behavioral clusters (3, *Cₗ*)*,* and the behavioral cluster affiliation shares (5) of the respective communication device (2, *Dᵢ*) in the behavioral clusters (3, *Cₗ),* in accordance with the regular communication behaviors of the respective communication device;
- form the device clusters (6, *DCₘ*) in accordance with the behavioral cluster affiliation shares (5) of the plurality of communication devices (2, *Dᵢ*); and
- determine the device cluster affiliation (7) of the respective communication device (2, *Dᵢ*) with the device clusters (6, *DCₘ*).

8. The device (1) of claim 7,
the behavioral cluster affiliations (4) of the respective communication device (2, *Dᵢ*) further comprising an affiliation associated with a silent behavior.

9. The device (1) of claim 7 or claim 8,
the processor (11) in the training phase further configured to
- store one or more of the following for use in the inference phase:
- the behavioral clusters (3, *Cₗ*),
- the behavioral cluster affiliations (4), and
- the device cluster affiliation (7).

10. A method (9) for unsupervised detection of an irregular communication behavior of a communication device under test, DUT (2, *Dᵢ*)*,* of a plurality of communication devices (2, *Dᵢ*)*,* the method (9) comprising in an inference phase,
- determining (91) a current communication behavior of the DUT (2, *Dᵢ*)*,* and
assessing (92) the current communication behavior of the DUT (2, *Dᵢ*) in view of regular communication behaviors of the plurality of communication devices (2, *Dᵢ*)*,*
wherein the plurality of communication devices (2, *Dᵢ*) are associated with behavioral clusters (3, *Cₗ*) in accordance with their regular communication behaviors and are associated with device clusters (6, *DCₘ*) in accordance with their respective behavioral cluster affiliation shares (5) in the behavioral clusters (3, *Cₗ*) in accordance with their regular communication behaviors;
wherein for assessing the current communication behavior of the DUT (2, *Dᵢ*)*,* the method comprises determining whether the current communication behavior of the DUT (2, *Dᵢ*) can be associated with any behavioral cluster affiliation (4) of the DUT (2, *Dᵢ*) with the behavioral clusters (3, *Cₗ*); and
- triggering an alarm if the current communication behavior of the DUT (2, *Dᵢ*) cannot be associated with any behavioral cluster affiliation (4) of the DUT (2, *Dᵢ*);
wherein a first-level alarm is triggered if the current communication behavior of the DUT (2, *Dᵢ*) can be associated with any behavioral cluster affiliation (4) of any communication device (2) associated with the same device cluster (6) as the DUT (2, *Dᵢ*); and
wherein a second-level alarm is triggered if the current communication behavior of the DUT (2, *Dᵢ*) cannot be associated with any behavioral cluster affiliation (4) of any communication device (2) associated with the same device cluster (6) as the DUT (2, *Dᵢ*).

11. The method (9) of claim 10,
being performed by the device (1) of any one of the claims 1 to 9.

12. A computer program, comprising
a program code for performing the method (9) of claim 10 or claim 11 when executed on a computer.
